(19) Europäisches Patentamt / European Patent Office / Office européen des brevets

(11) **EP 4 790 762 A1**

(12) **EUROPEAN PATENT APPLICATION**
published in accordance with Art. 153(4) EPC


(43) Date of publication:
**12.08.2026 Bulletin 2026/33**

(21) Application number: **24897218.4**

(22) Date of filing: **05.11.2024**

(51) International Patent Classification (IPC):
***H01M 4/139*** *(2010.01)* ***H01M 4/13*** *(2010.01)*
***H01M 4/36*** *(2006.01)* ***H01M 4/62*** *(2006.01)*
***H01M 4/131*** *(2010.01)* ***H01M 4/505*** *(2010.01)*
***H01M 4/525*** *(2010.01)* ***H01M 4/1391*** *(2010.01)*

(52) Cooperative Patent Classification (CPC):
**H01M 4/13; H01M 4/131; H01M 4/139; H01M 4/1391; H01M 4/36; H01M 4/505; H01M 4/525; H01M 4/62;** Y02E 60/10

(86) International application number:
**PCT/JP2024/039211**

(87) International publication number:
**WO 2025/115530 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.12.2023 JP 2023204178**
**20.02.2024 JP 2024023517**



(71) Applicant: **Nissan Chemical Corporation**
**Tokyo 103-6119 (JP)**

(72) Inventors:
- **HATANAKA, Tatsuya**
  **Funabashi-shi, Chiba 274-0052 (JP)**
- **KUBO, Ayako**
  **Funabashi-shi, Chiba 274-8507 (JP)**
- **ASAKA, Yukio**
  **Funabashi-shi, Chiba 274-8507 (JP)**

(74) Representative: **Müller-Boré & Partner Patentanwälte PartG mbB**
**Friedenheimer Brücke 21**
**80639 München (DE)**


(54) **COMPOSITION FOR FORMING ELECTRODE, ADDITIVE, AND GELATION INHIBITOR**


(57) A composition for forming an electrode, including: a compound having a ring structure and an unsaturated bond; a positive electrode active material; a binder; and a solvent, wherein the compound has a dissociable proton in a molecule, a proton dissociation energy of the compound is less than 1504.7 (kJ/mol), and a bond dissociation energy of the compound is less than 452.61 (kJ/mol).


FIG. 1

● EXAMPLE (A1～A27) ○ COMPARATIVE EXAMPLE (a1～a12, a25)
BOND DISSOCIATION ENERGY (kJ/mol)
500
450
400
350
300
250
1,300
1,350
1,400
1,450
1,500
1,550
1,600
1,650
PROTON DISSOCIATION ENERGY (kJ/mol)


EP 4 790 762 A1

## Description

Technical Field

The present invention relates to a composition for forming an electrode, an additive, and a gelation inhibitor. Further, the present invention relates to an electrode layer, a secondary battery, a method for producing a composition for forming an electrode, and a method for inhibiting gelation of the composition for forming an electrode.

Background Art

The lithium ion secondary battery has a high energy density per weight or volume, and thus contributes to miniaturization and weight reduction of a mounted electronic device. In recent years, as an effort for zero emission of automobiles, the spread of electric vehicles has accelerated, and further reduction in resistance, longer service life, higher capacity, safety, and cost reduction are required.

A lithium ion secondary battery generally has a structure in which a three-layer structure of a positive electrode, a separator, and a negative electrode includes an electrolytic solution. The positive electrode and the negative electrode are produced, for example, by coating a current collector with an electrode slurry obtained by mixing an active material, a conductive material, and a binder. Currently, as a method for producing a negative electrode, a process in which a negative electrode slurry is coated onto a copper foil to be a current collector and then dried has been widely adopted, and as a method for producing a positive electrode, a process in which a positive electrode slurry using an organic solvent such as N-methyl-2-pyrrolidone as a solvent is prepared and the obtained positive electrode slurry is coated onto an aluminum foil to be a current collector is widely adopted.

As a positive electrode active material of a lithium ion secondary battery, an inorganic compound such as a transition metal oxide including an alkali metal or a transition metal chalcogenide is known as a material capable of obtaining a battery voltage of around 4 V. Among these, a highly alkaline positive electrode active material including a large amount of nickel or manganese is used for the purpose of obtaining a lithium ion secondary battery having a high capacity.

For example, a high-nickel positive electrode active material represented by $LixNiO_2$ has a high discharge capacity and is an attractive positive electrode material, but alkali components such as LiOH, $Li_2O$, $LiHCO_3$, or $Li_2CO_3$ are present on the surface. The alkali components are residues of raw materials, or are alkali components generated by a proton exchange reaction of the high-nickel positive electrode active material with moisture, or are alkali components generated by a reaction of the high-nickel positive electrode active material with carbon dioxide in the air.

Using such a positive electrode active material is problematic in that the electrode slurry gradually loses its fluidity due to thickening or gelation. The loss of fluidity of the electrode slurry makes it difficult to obtain a uniform coating thickness, and in some cases, coating is failed, causing waste of material.

As a main cause of this, it is considered that in a process of preparing the positive electrode, an alkali component existing on the surface of the positive electrode active material promotes a dehydrofluorination reaction of a fluorine-based binder represented by polyvinylidene fluoride (PVdF) having a vinylidene fluoride structure used as a binder in the presence of a trace amount of moisture.

Further, the alkali component corrodes an aluminum foil generally used as a current collecting foil of a positive electrode, thereby increasing the resistance of the battery. In addition, the alkali component may react with the electrolytic solution in the battery to increase the resistance of the battery and deteriorate the life.

The thickening and gelation described above can be suppressed by handling the raw materials and the electrode slurry in a dry environment and controlling the amount of moisture, but large-scale facilities are required in a series of mass production processes from preparation of the electrode slurry to production of the battery, and an increase in cost and an increase in environmental load due to use of a large amount of electricity become a problem.

In order to solve this problem, for example, Patent Literature 1 discloses a technique of inhibiting gelation of an electrode slurry by preparing an electrode slurry (positive electrode material slurry) so as not to exhibit strong alkalinity when dispersed in water. However, in order to prepare an electrode slurry by the method described in Patent Literature 1 so as not to exhibit strong alkalinity, not only strict pH control is required, but also a treatment is required in which the positive electrode active material is once dispersed in water, filtered from the dispersion to take out the positive electrode active material, and then dried. As a result, the work becomes complicated and the yield decreases. In addition, the treatment as described above may cause a decrease in performance of the positive electrode active material itself.

In addition, Patent Literature 2 reports a technique in which using a compound such as polyethylene oxide having an ultra-high molecular weight (weight average molecular weight of 2.2 million or more) causes water to be restrained by an interaction with water (for example, hydrogen bonding), and a reaction between an alkali component of a positive electrode active material and water is inhibited, thereby inhibiting thickening and gelation. However, an ultra-high molecular weight polymer having a strong thickening effect requires time and cost for uniform dissolution treatment in a solvent, and has a problem in handling that it is difficult to obtain a high concentration solution. In addition, the ultra-high molecular weight

polymer described above has a high ability to restrain water, thus arising a concern that the polymer itself carries water, and in order to prevent this, strict control is required for previous drying.

Patent Literature 3 and Patent Literature 4 propose addition of an organic acid or an inorganic acid in order to inhibit gelation of an electrode slurry (positive electrode mixture slurry) in a positive electrode of a lithium ion secondary battery. In Patent Literature 3, maleic acid, citraconic acid, and malonic acid are used for the positive electrode mixture, and in Patent Literature 4, acetic acid, phosphoric acid, sulfuric acid, and the like are used for the electrode slurry (positive electrode paste). However, neutralization of an alkali with an acid requires addition of a large amount, which may result in a decrease in energy density of the battery and an increase in resistance of the battery. In addition, there is also a problem that the acid corrodes the device for fabricating the electrode. In addition, in this method, the acidity of the organic acid or the inorganic acid is high, and thus a neutralization reaction with lithium ions in the active material occurs, which may lead to deterioration of battery performance.

Patent Literature 5 reports a method for treating a positive electrode active material using fluorine gas and immobilizing remaining LiOH as LiF, thereby preventing gelation and inhibiting gas generation. However, fluorine gas is highly toxic and difficult to handle, and LiF generated as a by-product increases the internal resistance of the battery, which decreases capacity, and the capacity also decreases due to corrosion of the positive electrode active material by fluorine gas. Further, there is a problem that residual fluorine reacts with a trace amount of moisture present in the active material or the electrolytic solution to generate hydrogen fluoride, and cycle deterioration is likely to occur.

Patent Literature 6 reports that unreacted lithium hydroxide and impurities derived from raw materials are removed by washing with an aqueous solution including a lithium salt. However, there are problems in terms of an increase in environmental load due to wastewater discharged during washing and cost associated with treatment of wastewater.

## Citation List

### Patent Literature

Patent Literature 1: JP 2000-90917 A
Patent Literature 2: JP 2019-121471 A
Patent Literature 3: JP H09-306502 A
Patent Literature 4: JP H10-79244 A
Patent Literature 5: JP 2006-286240 A
Patent Literature 6: WO 2017/034001 A


## Summary of Invention

### Technical Problem

In view of such circumstances, an object of the present invention is to provide, by a simple method, a composition for forming an electrode in which thickening and gelation are inhibited to improve storage stability, and an additive and gelation inhibitor of the composition for forming an electrode. In addition, another object of the present invention is to provide an electrode layer and a secondary battery using a composition for forming an electrode, a method for producing the composition for forming an electrode, and a method for inhibiting gelation of the composition for forming an electrode.

### Solution to Problem

As a result of intensive studies to solve the above problem, the present inventors have found that the above problem can be solved, and completed the present invention having the following gist.

That is, the present invention includes the following items.

[1] A composition for forming an electrode, including: a compound having a ring structure and an unsaturated bond; a positive electrode active material; a binder; and a solvent, wherein

the compound has a dissociable proton in a molecule,
a proton dissociation energy of the compound is less than 1504.7 (kJ/mol), and
a bond dissociation energy of the compound is less than 452.61 (kJ/mol).

[2] The composition for forming an electrode according to [1], wherein the positive electrode active material includes a

first positive electrode active material in the form of a polycrystalline body and a second positive electrode active material in the form of a single crystal.

[3] The composition for forming an electrode according to [2], wherein the first positive electrode active material is a lithium-containing transition metal oxide particle having a layered rock salt structure, and a crystallite diameter determined by the Scherrer equation based on a diffraction peak of a (104) plane obtained from an X-ray diffraction pattern of the lithium-containing transition metal oxide particle using a CuK$\alpha$ radiation source is 20 nm or more and less than 500 nm.

[4] The composition for forming an electrode according to [2] or [3], wherein the second positive electrode active material is a lithium-containing transition metal oxide particle having a layered rock salt structure, and a crystallite diameter determined by the Scherrer equation based on a diffraction peak of a (104) plane obtained from an X-ray diffraction pattern of the lithium-containing transition metal oxide particle using a CuK$\alpha$ radiation source is 50 nm or more and less than 800 nm.

[5] The composition for forming an electrode according to [3] or [4], wherein a lithium-containing transition metal oxide particle having a layered rock salt structure in the first positive electrode active material is a crystalline metal-based oxide particle represented by the general formula:

$$LiaNi_{(1-x-y)}Co_xM^1_yM^2_zO_2$$

wherein $M^1$ represents at least one selected from the group consisting of Mn and Al, $M^2$ represents at least one selected from the group consisting of Zr, Ti, Mg, B, W, and V, and $1.00 \le a \le 1.50$, $0.00 \le x \le 0.50$, $0.00 \le y \le 0.50$, and $0.000 \le z \le 0.020$.

[6] The composition for forming an electrode according to [4] or [5], wherein the lithium-containing transition metal oxide particle having a layered rock salt structure in the second positive electrode active material is a crystalline metal-based oxide particle represented by the general formula:

$$Li_aNi_{(1-x-y)}Co_xM^1_yM^2_zO_2$$

wherein $M^1$ represents at least one selected from the group consisting of Mn and Al, $M^2$ represents at least one selected from the group consisting of Zr, Ti, Mg, B, W, and V, and $1.00 \le a \le 1.50$, $0.00 \le x \le 0.50$, $0.00 \le y \le 0.50$, and $0.000 \le z \le 0.020$.

[7] The composition for forming an electrode according to any one of [1] to [6], wherein the ring structure is an aromatic ring.

[8] The composition for forming an electrode according to any one of [1] to [7], wherein the compound has a hetero atom.

[9] The composition for forming an electrode according to any one of [1] to [8], wherein the positive electrode active material includes a Ni-containing metal oxide.

[10] The composition for forming an electrode according to any one of [1] to [9], wherein the positive electrode active material includes Ni, and a Ni content in the positive electrode active material is 30 mass% or more and 61 mass% or less.

[11] The composition for forming an electrode according to any one of [1] to [10], wherein the solvent is an aprotic solvent.

[12] The composition for forming an electrode according to any one of [1] to [11], wherein the binder is a fluorine-based binder.

[13] The composition for forming an electrode according to any one of [1] to [12], further including a conductive aid.

[14] An electrode layer obtained from the composition for forming an electrode according to any one of [1] to [13].

[15] A secondary battery including the electrode layer according to [14].

[16] A method for producing the composition for forming an electrode according to any one of [1] to [13], the method including mixing the compound, the binder, the solvent, a first positive electrode active material in the form of a polycrystalline body, and a second positive electrode active material in the form of a single crystal.

[17] The method for producing a composition for forming an electrode according to [16], wherein a mass ratio between the first positive electrode active material and the second positive electrode active material (first positive electrode active material : second positive electrode active material) in the composition for forming an electrode is 2:8 to 8:2.

[18] An additive of a composition for forming an electrode, the composition including: a first positive electrode active material in the form of a polycrystalline body; a second positive electrode active material in the form of a single crystalline body; a binder; and a solvent,

the additive having a dissociable proton in a molecule, a proton dissociation energy of less than 1504.7 (kJ/mol), and a bond dissociation energy of less than 452.61 (kJ/mol).

[19] A gelation inhibitor of a composition for forming an electrode, the composition including: a first positive electrode

active material in the form of a polycrystalline body; a second positive electrode active material in the form of a single crystal; a binder; and a solvent, the gelation inhibitor having a dissociable proton in a molecule, a proton dissociation energy of less than 1504.7 (kJ/mol), and a bond dissociation energy of less than 452.61 (kJ/mol).

[20] A method for inhibiting gelation of a composition for forming an electrode, the composition including: a first positive electrode active material in the form of a polycrystalline body; a second positive electrode active material in the form of a single crystal; a binder; and a solvent,

the method causing the composition for forming an electrode to contain a compound having a dissociable proton in a molecule, a proton dissociation energy of less than 1504.7 (kJ/mol), and a bond dissociation energy of less than 452.61 (kJ/mol).

## Advantageous Effects of Invention

The present invention can provide, by a simple method, a composition for forming an electrode in which thickening and gelation are inhibited to improve storage stability, and an additive and gelation inhibitor of the composition for forming an electrode. In addition, the present invention can provide an electrode layer and a secondary battery using a composition for forming an electrode, a method for producing the composition for forming an electrode, and a method for inhibiting gelation of the composition for forming an electrode.

## Brief Description of Drawings

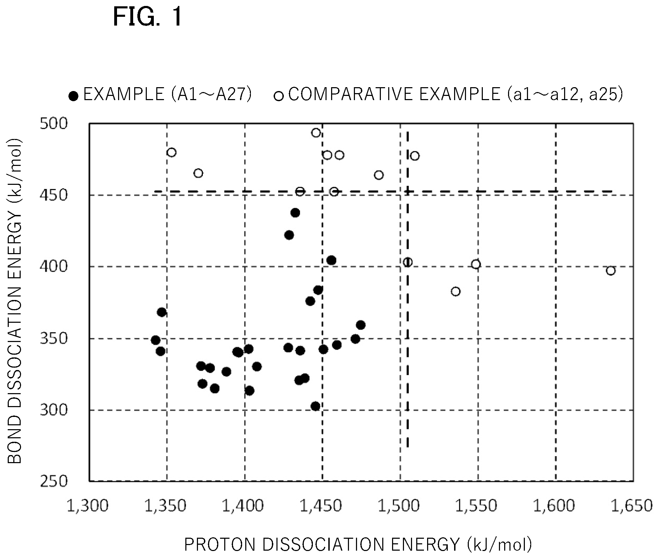

[Fig. 1] Fig. 1 is a graph in which proton dissociation energy is plotted on a horizontal axis and bond dissociation energy is plotted on a vertical axis for additives A1 to A27, a1 to a12, and a25.

## Description of Embodiments

### (Composition for forming an electrode)

The composition for forming an electrode according to the present invention includes at least a compound having a ring structure and an unsaturated bond (hereinafter, may be referred to as a "specific compound"), a positive electrode active material, a binder, and a solvent.

The composition for forming an electrode may include other components.

The specific compound has a dissociable proton in the molecule.

The proton dissociation energy of the specific compound is less than 1504.7 (kJ/mol).

The bond dissociation energy of the specific compound is less than 452.61 (kJ/mol).

The composition for forming an electrode according to the present invention hardly causes thickening and gelation, has high storage stability, and can be suitably used for formation of a positive electrode for a secondary battery. When the secondary battery including an electrode fabricated using the composition is produced, advantages such as improvement in quality and yield due to improvement in storage stability of the composition, cost reduction and environmental load reduction due to an increase in solid content, and suppression of deterioration in a battery caused by an alkali component are expected, and this can contribute to reduction in production cost of the secondary battery and improvement in battery characteristics.

When the composition for forming an electrode includes two types of positive electrode active materials (in particular, a first positive electrode active material in the form of a polycrystalline body and a second positive electrode active material in the form of a single crystal), thickening and gelation are more likely to occur. In one aspect of the composition for forming an electrode according to the present invention, a specific compound is added to the composition for forming an electrode, the composition including a positive electrode active material containing two types of positive electrode active materials (in particular, a first positive electrode active material in the form of a polycrystalline body and a second positive electrode active material in the form of a single crystal), thereby making it possible to inhibit thickening and gelation of a composition that is more likely to be thickened and gelled.

Although the mechanism of thickening and gelation and the mechanism of exhibition of the inhibitory effect thereof are not clear, the present inventors consider as one factor that the specific compound inactivates radicals that are generated in the composition and promote thickening and gelation by adding the specific compound to the composition for forming an electrode.

When the compound has a dissociable proton and the proton dissociation energy of the compound is small, the compound easily releases a proton, and the released proton is easily reduced by one electron to generate hydrogen radicals. When the bond dissociation energy of the compound is small, the compound is easily radicalized. This is illustrated as follows.

[Chem. 1]

The hydrogen radicals react (for example, radical coupling) with a binder that has been radicalized due to, for example, alkali components present or generated in the composition. When the radicals of the binder are inactivated by the above reaction, the reaction of the binder so as to promote thickening and gelation is inhibited. As a result, it is considered that the thickening and gelation of the composition can be inhibited to improve the storage stability. However, these are estimates, and the present invention is not interpreted as being limited to these mechanisms.
Inhibiting thickening and gelation of the composition for forming an electrode allows a homogeneous positive electrode layer to be formed. In addition, it is also possible to improve the concentration of the solid content in the electrode slurry, and it is possible to reduce the cost of making the energy storage device and the environmental load. Further, it is possible to inhibit corrosion of an aluminum foil generally used as a current collecting foil, the corrosion derived from an alkali component, and deterioration of battery characteristics due to a reaction with an electrolytic solution.

<Specific compound>

The specific compound is a compound having a ring structure and an unsaturated bond.
The specific compound has a dissociable proton in the molecule.
The proton dissociation energy of the specific compound is less than 1504.7 (kJ/mol).
The bond dissociation energy of the specific compound is less than 452.61 (kJ/mol).
Although the specific compound has a ring structure and an unsaturated bond, the presence or absence of the ring structure and the unsaturated bond is not important in terms of whether or not the effect of the present invention is achieved.
The ring structure possessed by the specific compound may be an aliphatic ring or an aromatic ring.
The ring structure possessed by the specific compound may be a hydrocarbon ring or a heterocyclic ring.
The specific compound may have a heterocyclic ring or may not have a heterocyclic ring.
The specific compound may have an aromatic ring or may not have an aromatic ring.
The unsaturated bond possessed by the specific compound may be a double bond or a triple bond.
The unsaturated bond possessed by the specific compound may be an unsaturated bond constituting a ring structure.
For example, benzene is a compound having a ring structure and three unsaturated bonds.
Examples of the double bond include a carbon-carbon double bond, a carbon-oxygen double bond, a carbon-nitrogen double bond, a carbon-sulfur double bond, and a nitrogennitrogen double bond.
Examples of the triple bond include a carbon-carbon triple bond and a carbon-nitrogen triple bond.
The number of unsaturated bonds in the specific compound is not particularly limited, and may be one or two or more.
The specific compound is composed of, for example, at least one of hydrogen and nonmetallic elements of Group 14 elements to Group 17 elements. Examples of the nonmetallic element of the nonmetallic elements of Group 14 elements to Group 17 elements include boron, carbon, silicon, nitrogen, phosphorus, oxygen, sulfur, and halogen.
The specific compound may have a hetero atom or may not have a hetero atom. Examples of the hetero atom include an oxygen atom, a nitrogen atom, a phosphorus atom, a silicon atom, a sulfur atom, and a halogen atom. Examples of the halogen atom include a fluorine atom, a chlorine atom, an iodine atom, and a bromine atom.
For example, when the specific compound has a hetero atom, the hetero atom possessed by the specific

compound is only at least one of an oxygen atom, a sulfur atom, and a nitrogen atom.

For example, when the specific compound has a hetero atom, the hetero atom possessed by the specific compound is only a nitrogen atom.

The specific compound is different from the solvent in the present invention. In this respect, the specific compound is, for example, a solid at normal temperature. The "solid at normal temperature" in the present invention means that the melting point at 1 atm is 25°C or more.

The molecular weight of the specific compound is not particularly limited, and may be, for example, 60 to 1,000, 60 to 700, 100 to 700, or 100 to 350.

The number of dissociable protons of the specific compound is not particularly limited, and may be one or two or more.

When the proton dissociation energy can be calculated, it can be said that the compound has a dissociable proton.

The proton dissociation energy of the specific compound is less than 1504.7 (kJ/mol), and may be 1489.6 (kJ/mol) or less or 1474.5 or less.

The lower limit value of the proton dissociation energy is not particularly limited, but the proton dissociation energy may be, for example, 1254.0 (kJ/mol) or more, 1300.0 (kJ/mol) or more, or 1345.9 (kJ/mol) or more.

The method for calculating the proton dissociation energy is as follows.

[Method for calculating proton dissociation energy]

The optimized structure in the ground state of the target molecule (HA) under vacuum is calculated using B3LYP as the functional and 6-31+G (d) as the basis set, and the total energy E (HA) thereof is calculated. Further, for the anion ($A^-$) obtained by dissociating one dissociable proton ($H^+$) from the target molecule (HA), the optimized structure in the ground state under vacuum is calculated using B3LYP as the functional and 6-31+G (d) as the basis set, and the total energy E ($A^-$) thereof is calculated to calculate the proton dissociation energy $\Delta E_{pd}$ (unit: kJ/mol) defined by the following formula (a).

$$\text{(a)}\quad \Delta E_{pd} = [E(A^-) + E(H^+)] - E(HA)$$

However, protons ($H^+$) do not have electrons, and thus the total energy cannot be evaluated by quantum chemistry calculation, and the value of the total energy E ($H^+$) of protons herein is therefore set to 0 kJ/mol. For the target molecule having a plurality of dissociable protons, the proton dissociation energy for the proton dissociation site that gives the minimum total energy E ($A^-$) of the anion after the proton dissociation is calculated in consideration of only the first proton dissociation.

The bond dissociation energy of the specific compound is less than 452.61 (kJ/mol), and may be 445.20 (kJ/mol) or less or 437.78 (kJ/mol) or less.

The lower limit value of the bond dissociation energy is not particularly limited, but the bond dissociation energy may be, for example, 250.00 (kJ/mol) or more, 276.33 (kJ/mol) or more, or 302.65 (kJ/mol) or more.

The method for calculating the bond dissociation energy is as follows.

[Method for calculating bond dissociation energy]

For a neutral radical (A·) obtained by extracting one hydrogen radical (H·) from the target molecule, the optimized structure in the ground state under vacuum is calculated using B3LYP as a functional and 6-31+G(d) as a basis set, and the total energy E(A·) is calculated. Further, also for the hydrogen radical (H·), the total energy E(H·) is calculated using B3LYP as a functional and 6-31+G(d) as a basis set, and the value of E(HA) obtained by the calculation of the proton dissociation energy is used to calculate the bond dissociation energy $\Delta E_{bd}$ (unit: kJ/mol) defined by the following formula (b).

$$\text{(b)}\quad \Delta E_{bd} = [E(A\cdot) + E(H\cdot)] - E(HA)$$

Although the target molecule has a plurality of hydrogen atoms, the bond dissociation energy at the abstraction site that gives the minimum total energy E(A·) of the neutral radical obtained by hydrogen abstraction is calculated in consideration of only one hydrogen abstraction.

An example of the specific compound is shown.

[Chem. 2]

[Chem. 3]

The content of the specific compound in the composition for forming an electrode is not particularly limited, and is preferably 0.001 to 4 mass%, more preferably 0.001 to 2 mass%, still more preferably 0.001 to 0.5 mass%, further preferably 0.001 to 0.3 mass%, and particularly preferably 0.001 to 0.2 mass% in the solid content.

In addition, the lower limit of the content of the specific compound is still more preferably 0.01 mass% in the solid content. The content of the specific compound is set to the above range, thereby allowing gelation of the composition for forming an electrode to be effectively inhibited, and the battery characteristics of the obtained battery to be maintained. In the present invention, the solid content means components constituting the composition other than a solvent (the same applies hereinafter).

In addition, the content of the specific compound in the composition for forming an electrode is preferably 0.001 to 4 parts by mass, more preferably 0.001 to 2 parts by mass, still more preferably 0.001 to 0.5 parts by mass, further preferably 0.001 to 0.3 parts by mass, and particularly preferably 0.001 to 0.2 parts by mass, based on 100 parts by mass of the positive electrode active material.

The content of the specific compound is set to the above range, thereby allowing gelation of the composition for forming an electrode to be effectively inhibited, and the battery characteristics of the obtained battery to be maintained.

In addition, the content of the specific compound in the composition for forming an electrode is preferably 0.1 to 50 parts by mass, more preferably 0.1 to 30 parts by mass, and still more preferably 0.1 to 20 parts by mass, based on 100 parts by mass of the binder.

The content of the specific compound is set to the above range, thereby allowing gelation of the composition for forming an electrode to be effectively inhibited, and the battery characteristics of the obtained battery to be maintained.

In addition, when the composition for forming an electrode contains a conductive aid, the content of the specific compound in the composition for forming an electrode is preferably 0.1 to 50 parts by mass, more preferably 0.1 to 30 parts by mass, and still more preferably 0.1 to 20 parts by mass, based on 100 parts by mass of the conductive aid.

<Positive electrode active material>

The positive electrode active material is not particularly limited.

The positive electrode active material including S, Fe, or Ni is preferable, and one including S, Fe, or Ni in an amount of 30 mass% or more is more preferable, from the viewpoint of further improving the battery capacity, reducing the amount of rare metals used, and reducing the cost. In consideration of further reducing the amount of the rare metal used and obtaining a battery having a longer life, one including Fe or Ni in an amount of 35 mass% or more is still more preferable, and one including Fe or Ni in an amount of 45 mass% or more is further preferable. In addition, the upper limit thereof is not particularly limited, and is typically 61 mass% or less.

The composition for forming an electrode including a positive electrode active material having a high nickel content has a strong tendency of thickening and gelation. Therefore, the positive electrode active material preferably contains Ni, more preferably has a Ni content of 30 mass% or more, and particularly preferably has a Ni content of 40 mass% or more, in that thickening and gelation can be inhibited in a composition for forming an electrode including a positive electrode active material having a high nickel content. The upper limit of the Ni content in the positive electrode active material is not particularly limited, and for example, the Ni content is 61 mass% or less.

The positive electrode active material can be appropriately selected and used from various active materials conventionally used for an electrode for a secondary battery. For example, in the case of a lithium secondary battery or a lithium ion secondary battery, a chalcogen compound or a lithium ion-containing chalcogen compound capable of adsorbing and desorbing lithium ions, a polyanionic-based compound, a sulfur simple substance, a compound thereof, and the like can be used.

Examples of the lithium ion-containing chalcogen compound include $LiNiO_2$, $Li_xNi_yM_{1-y}O_2$ (M represents at least one metal element selected from Co, Mn, Ti, Cr, V, Al, Sn, Pb, and Zn, and $0.05 \leq x \leq 1.10$ and $0.3 \leq y \leq 1.0$), and $Li_aNi_{(1-x-y)}Co_xM^1_yM^2_zO_2$ ($M^1$ represents at least one selected from the group consisting of Mn and Al, $M^2$ represents at least one selected from the group consisting of Zr, Ti, Mg, B, Zr, Si, W, and V, $1.00 \leq a \leq 1.50$, $0.00 \leq x \leq 0.50$, $0.00 \leq y \leq 0.50$, and $0.000 \leq z \leq 0.020$).

Examples of the polyanionic-based compound include $LiFePO_4$ and $Li_aMn_bFe_cD_dPO_4$ ($1.00 \leq a \leq 1.15$, $0.01 \leq b \leq 0.99$, $0.01 \leq c \leq 0.99$, $0.00 \leq d \leq 0.10$, and D is selected from Co, Mn, Ti, Cr, V, Al, Sn, Pb, and Zn, and at least a part thereof has an olivine structure).

Examples of the sulfur compound include sulfur, $Li_2S$, $FeS_2$, $TiS_2$, $MoS_2$, and rubeanic acid.

These positive electrode active materials can be used singly or in combination of two or more types thereof.

Among the positive electrode active materials, the general formula $Li_aNi_{(1-x-y)}Co_xM^1_yM^2_zO_2$ (wherein $M^1$ represents at least one selected from the group consisting of Mn and Al, $M^2$ represents at least one selected from the group consisting of Zr, Ti, Mg, B, W, and V, $1.00 \leq a \leq 1.50$, $0.00 \leq x \leq 0.50$, $0.00 \leq y \leq 0.50$, and $0.000 \leq z \leq 0.020$) is preferable.

x may be $0.01 \leq x \leq 0.30$ or $0.03 \leq x \leq 0.20$.

y may be $0.01 \leq x \leq 0.30$ or $0.03 \leq x \leq 0.20$.

x+y may be $0.02 \leq (x+y) \leq 0.40$ or $0.05 \leq (x+y) \leq 0.30$.

$Li_aNi_{(1-x-y)}Co_xM^1_yM^2_zO_2$ preferably has a Ni content of 30 mass% or more, preferably a Ni content of 40 mass% or

more, more preferably a Ni content of 45 mass% or more, and particularly preferably a Ni content of 47 mass% or more. The upper limit of the Ni content is not particularly limited, and for example, the Ni content is 61 mass% or less.

These active materials can be used singly or in combination of two or more types thereof.

When the composition for forming an electrode includes two types of positive electrode active materials (in particular, a first positive electrode active material in the form of a polycrystalline body and a second positive electrode active material in the form of a single crystal), thickening and gelation are more likely to occur. The specific compound is added to the composition for forming an electrode, the composition including a positive electrode active material containing two types of positive electrode active materials (in particular, a first positive electrode active material in the form of a polycrystalline body and a second positive electrode active material in the form of a single crystal), thereby making it possible to inhibit thickening and gelation of a composition that is more likely to be thickened and gelled. In this respect, the positive electrode active material preferably includes a first positive electrode active material in the form of a polycrystalline body and a second positive electrode active material in the form of a single crystal.

The first positive electrode active material in the form of a polycrystalline body is, for example, lithium-containing transition metal oxide particles having a layered rock salt structure. The crystallite diameter determined by the Scherrer equation based on the diffraction peak of the (104) plane obtained from the X-ray diffraction pattern of the lithium-containing transition metal oxide particle as the first positive electrode active material using the CuKα radiation source is, for example, 20 nm or more and less than 500 nm.

The second positive electrode active material in the form of a single crystal is, for example, lithium-containing transition metal oxide particles having a layered rock salt structure. The crystallite diameter determined by the Scherrer equation based on the diffraction peak of the (104) plane obtained from the X-ray diffraction pattern of the lithium-containing transition metal oxide particle as the second positive electrode active material using the CuKα radiation source is, for example, 50 nm or more and less than 800 nm.

For example, the crystallite diameter of the first positive electrode active material and the crystallite diameter of the second positive electrode active material satisfy the relationship of the following equation (X).

$$x1 < (\tau 2) - (\tau 1) \leq x2 \quad \text{(Equation (X))}$$

τ1: crystallite diameter (nm) of first positive electrode active material
τ2: crystallite diameter (nm) of second positive electrode active material
x1 is 0 nm, preferably 10 nm, more preferably 30 nm, and particularly preferably 70 nm.
x2 is 400 nm, preferably 350 nm, more preferably 300 nm, and particularly preferably 250 nm.

The crystallite diameter can be determined, for example, as follows.

[X-ray diffraction measurement]

The X-ray diffraction pattern of the positive electrode active material is collected using an X'Pert Pro MPD (manufactured by PANalytical B.V.) using a CuKα radiation source (45 kV, 40 mA) emitting at a wavelength of 1.5418 Å. As a configuration of the device, a soller slit of 0.02 radians, an automatically variable divergence slit with an irradiation area of 10 mm, and a 1/2° anti-scattering slit are used on the incident side, and an anti-scattering slit of 8 mm and a soller slit of 0.02 radians are set on the light receiving side. The radius of the goniometer is 240 mm. In XRD, the diffraction pattern is obtained in the range of 10 to 100° (2θ) at a step size of 0.013°/scan with a time per step of 250 seconds.

The crystallite diameter of the positive electrode active material is calculated from the diffraction angle of the peak corresponding to the (104) plane and the full width at half maximum (FWHM), obtained from an X-ray diffraction pattern, the full width at half maximum being corrected by subtracting the instrumental broadening, using the well-known Scherrer equation.
[Scherrer equation]

[Mathematical Formula 1]

$$\tau = \frac{K\lambda}{\beta\cos\theta}$$

τ: crystallite diameter (unit: nm)

(The crystallite diameter refers to an average size of regular (crystalline) domains that can be equal to or less than the crystal grain size.)
K: Scherrer constant (K = 0.9)
$\lambda$: X-ray wavelength (CuK$\alpha$ = 0.15418 nm)
$\beta$:FWHM
$\theta$: 1/2 of diffraction angle 2$\theta$ of diffraction peak attributed to (104) plane

The peak of the (104) plane assigned to the crystal structure having the space group R-3m is observed at 44.5 ± 1° of the X-ray diffraction pattern.

The instrumental broadening is taken as the full width at half maximum at 47.3° obtained using Si powder (SRM 640f, manufactured by NIST).

When the positive electrode active material includes the first positive electrode active material in the form of a polycrystalline body and the second positive electrode active material in the form of a single crystal, the mass ratio between the first positive electrode active material and the second positive electrode active material (first positive electrode active material : second positive electrode active material) in the composition for forming an electrode is not particularly limited, and is preferably 2:8 to 8:2, more preferably 4:6 to 8:2, and particularly preferably 4:6 to 7:3.

The content of the positive electrode active material in the composition for forming an electrode is not particularly limited, and is preferably 88.0 to 99.949 mass%, more preferably 88.0 to 99.899 mass%, and still more preferably 95.0 to 99.0 mass% in the solid content.

<Binder>

The binder can be appropriately selected from known materials and used, and is not particularly limited, and examples thereof include fluorine-based binders, polyimides, ethylene-propylene-diene terpolymers, styrenebutadiene rubbers, polyethylene, and polypropylene. These are nonaqueous binders.

Examples of the fluorine-based binder include: polyvinylidene fluoride (PVdF); polytetrafluoroethylene (PTFE); a copolymer containing at least one monomer selected from the group consisting of vinylidene fluoride, tetrafluoroethylene, and hexafluoropropylene.

From the viewpoint of improving the storage stability of the composition for forming an electrode, it is preferable to use a fluorine-based binder. In addition, the fluorine-based binder is preferably modified with a polar functional group such as a carboxy group or a hydroxyl group. The polar functional group can be confirmed by the presence or absence of a clear peak detected in a range of 10 to 15 ppm by measurement with a nuclear magnetic resonance apparatus (NMR apparatus).

The binder may be used singly or in combination with two or more thereof.

The weight average molecular weight (Mw) of the binder is not particularly limited, and is 600,000 to 3,000,000, preferably 700,000 to 2,000,000, and more preferably 700,000 to 1,500,000 from the viewpoint of improving adhesion between the current collector and the electrode layer.

The weight average molecular weight is a value in terms of polystyrene measured by gel permeation chromatography (GPC).

The content of the binder in the composition for forming an electrode is not particularly limited, and is preferably 0.05 to 8 mass%, more preferably 0.05 to 5 mass%, still more preferably 0.05 to 4 mass%, further preferably 0.1 to 3 mass%, particularly preferably 0.2 to 2 mass%, and most preferably 0.3 to 1.5 mass% in the solid content from the viewpoint of suppressing the cost and obtaining a high energy density.

<Solvent>

The solvent is not particularly limited, and examples thereof include solvents conventionally used for preparing a composition for forming an electrode.

Examples of the solvent include water and an organic solvent.

Examples of the organic solvent include ethers, halogenated hydrocarbons, amides, ketones, alcohols, aliphatic hydrocarbons, aromatic hydrocarbons, glycol ethers, glycols, carbonates, and other organic solvents.

Examples of the ethers include tetrahydrofuran (THF), diethyl ether, and 1,2-dimethoxyethane (DME).

Examples of the halogenated hydrocarbons include methylene chloride, chloroform, and 1,2-dichloroethane.

Examples of the amides include N,N-dimethylformamide (DMF), N,N-dimethylacetamide (DMAc), and N-methyl-2-pyrrolidone (NMP).

Examples of the ketones include acetone, methyl ethyl ketone, methyl isobutyl ketone, and cyclohexanone.

Examples of the alcohols include methanol, ethanol, n-propanol, isopropanol, n-butanol, and t-butanol.

Examples of the aliphatic hydrocarbons include n-heptane, n-hexane, and cyclohexane.

Examples of the aromatic hydrocarbons include benzene, toluene, xylene, and ethylbenzene.

Examples of the glycol ethers include ethylene glycol monoethyl ether, ethylene glycol monobutyl ether, and propylene glycol monomethyl ether.

Examples of the glycols include ethylene glycol and propylene glycol.

Examples of the carbonates include ethylene carbonate, propylene carbonate, dimethyl carbonate, diethyl carbonate, and methyl ethyl carbonate.

Examples of other organic solvents include γ-butyrolactone, dimethyl sulfoxide (DMSO), dioxolane, and sulfolane.

In addition, the organic solvent may be a protic solvent or an aprotic solvent, but an aprotic solvent is preferable.

The aprotic solvent may have polarity or may not have polarity, for example.

As the aprotic solvent, amides, ketones, and carbonates are preferable, and amides are more preferable.

These solvents can be used singly or in combination of two or more thereof.

The binder may be used by being dissolved or dispersed in these solvents as necessary. Suitable solvents in this case include water, NMP, DMSO, ethylene carbonate, propylene carbonate, dimethyl carbonate, diethyl carbonate, methylethyl carbonate, γ-butyrolactone, THF, dioxolane, sulfolane, DMF, DMAc, and the like. The solvent may be appropriately selected according to the type of the binder, and NMP is suitable in the case of a water-insoluble binder such as PVdF, and water is suitable in the case of a watersoluble binder.

The solid content concentration of the composition for forming an electrode is appropriately set in consideration of the coatability of the composition, the thickness of the electrode to be formed, and the like, and is typically 60 to 92 mass%, preferably 65 to 90 mass%, and more preferably 70 to 85 mass%.

<Other components>

Examples of other components that may be contained in the composition for forming an electrode include a conductive aid and a dispersant.

<<Conductive aid>>

The conductive aid is used, for example, for improving electrical conductivity.

The conductive aid is not particularly limited, and examples thereof include a carbon material and a conductive polymer.

Examples of the carbon material include graphite, carbon black, acetylene black (AB), vapor grown carbon fiber, carbon nanotube (CNT), carbon nanohorn, and graphene.

Examples of the conductive polymer include polyaniline, polypyrrole, polythiophene, polyacetylene, and polyacene.

The conductive aid can be used singly or in combination of two or more thereof.

The content of the conductive aid in the composition for forming an electrode is not particularly limited, and is preferably 0.05 to 5 mass%, more preferably 0.05 to 4 mass%, still more preferably 0.1 to 3 mass%, and further preferably 0.2 to 2 mass% in the solid content. Setting the content of the conductive aid within the above range allows favorable electrical conductivity to be obtained.

The composition for forming an electrode does not include, for example, graphene.

When the composition for forming an electrode contains graphene, the content of graphene in the conductive aid is not particularly limited, and is preferably 45 mass% or less, more preferably 40 mass% or less, and particularly preferably 10 mass% or less.

<<Dispersant>>

The dispersant is used, for example, for improving dispersibility of substances such as a positive electrode active material and a conductive aid.

The dispersant can be appropriately selected from, for example, those conventionally used as a dispersant for conductive carbon materials such as CNTs, and the dispersant is preferably a nonionic polymer from the viewpoint of stability in a battery.

Examples of the nonionic polymer include polyvinylpyrrolidone (PVP), and a polymer having at least one functional group selected from the group consisting of a nitrile group, a hydroxy group, a carbonyl group, an amino group, a sulfonyl group, and an ether group.

Examples of the functional group-containing polymer include polyvinyl alcohol, polyacrylonitrile, polylactic acid, polyester, polyimide, polyphenyl ether, polyphenyl sulfone, polyethyleneimine, and polyaniline.

As the dispersant, a polymer having a pyrrolidone structure or a nitrile group is preferable, and polyvinylpyrro-

lidone and polyacrylonitrile are more preferable.

The dispersant may be used singly or in combination of two or more thereof.

The content of the dispersant in the composition for forming an electrode is not particularly limited, and is preferably 0.001 to 0.5 mass%, more preferably 0.001 to 0.3 mass%, and still more preferably 0.001 to 0.2 mass% in the solid content. In addition, the lower limit of the content of the dispersant is still more preferably 0.01 mass% in the solid content.

In addition, in consideration of adhesion between the resulting electrode layer and the current collector, the total amount of the specific compound and the dispersant is preferably 0.001 to 1 mass% and more preferably 0.01 to 1 mass% in the solid content.

The viscosity of the composition for forming an electrode is appropriately set in consideration of the coating method, the thickness of the electrode to be formed, and the like, and is typically about 100 to 2,000,000 mPa·s, preferably about 300 to 1,000,000 mPa·s, and more preferably about 400 to 800,000 mPa·s. The viscosity is a value measured at 25°C by an E-type viscometer.

The composition for forming an electrode according to the present invention can be obtained by mixing the above-described components. When an optional component other than the gelation inhibitor (specific compound) that is the additive of the present invention, the positive electrode active material, and the binder is included, the gelation inhibitor that is an additive and the positive electrode active material may be mixed together with the optional component, or may be mixed with the optional component after both components are previously mixed. In any method, the effect of the present invention can be exhibited.

(Electrode layer)

The electrode layer of the present invention is obtained from the composition for forming an electrode according to the present invention.

Examples of the method for forming the electrode layer include a method in which a coating film is formed by applying a composition for forming an electrode on a substrate, and then the coating film is dried. This method is not particularly limited, and various conventionally known methods can be used. Specific examples of the coating method include various printing methods such as offset printing and screen printing, a blade coating method, a dip coating method, a spin coating method, a bar coating method, a slit coating method, an inkjet method, and a die coating method.

In addition, when the coating film is dried, either natural drying or heat drying may be employed, but heat drying is preferable from the viewpoint of production efficiency. When heat drying is performed, the temperature is preferably 50 to 400°C, more preferably 70 to 150°C.

The film thickness of the electrode layer is not particularly limited, and is preferably 0.01 to 1,000 μm, and more preferably 5 to 300 μm.

In the secondary battery, when the electrode layer is used alone as an electrode, the film thickness is preferably 10 μm or more.

(Electrode)

The electrode of the present invention includes, for example, the electrode layer of the present invention on at least one surface on a substrate that is a current collector.

Examples of the substrate used for the electrode include a metal substrate of platinum, gold, iron, stainless steel, copper, aluminum, lithium, or the like, an alloy substrate including any combination of these metals, an oxide substrate of indium tin oxide (ITO), or indium zinc oxide (IZO), antimony tin oxide (ATO), or a carbon substrate of glassy carbon, pyrolytic graphite, or carbon felt.

The thickness of the substrate is not particularly limited, and is preferably 1 to 100 μm, more preferably 3 to 30 μm, and particularly preferably 5 to 25 μm.

The electrode may be pressed as necessary. As the pressing method, a generally employed method can be used, but a die pressing method or a roll pressing method is particularly preferable. In addition, the pressing pressure is not particularly limited, and is preferably 1 kN/cm or more, more preferably 2 kN/cm or more, and particularly preferably 5 kN/cm or more. In addition, the upper limit of the pressing pressure is not particularly limited, and the pressing pressure is preferably 50 kN/cm or less.

(Secondary battery)

The secondary battery of the present invention includes the electrode layer of the present invention.

The secondary battery of the present invention includes, for example, the electrode of the present invention.

The secondary battery includes, for example, at least a pair of a positive electrode and a negative electrode, a

separator interposed between the respective electrodes, and an electrolyte. The positive electrode is the electrode of the present invention.

The material used for the separator is not particularly limited, and examples thereof include glass fiber, cellulose, porous polyolefin, polyamide, and polyester.

The electrolyte may be either a liquid or a solid, or may be aqueous or nonaqueous, but an electrolytic solution composed of an electrolyte salt, a solvent, and the like can be suitably used from the viewpoint of easily exhibiting practically sufficient performance.

Examples of the electrolyte salt include lithium salts such as $LiPF_6$, $LiBF_4$, $LiN(SO_2F)_2$, $LiN(C_2F_5SO_2)_2$, $LiAsF_6$, $LiSbF_6$, $LiAlF_4$, $LiGaF_4$, $LiInF_4$, $LiClO_4$, $LiN(CF_3SO_2)_2$, $LiCF_3SO_3$, $LiSiF_6$, $LiN(CF_3SO_2)$, and $(C_4F_9SO_2)$; metal iodide such as LiI, NaI, KI, CsI, and $CaI_2$; iodide salt of quaternary imidazolium compound; iodide salt and perchlorate salt of tetraalkylammonium compound; and metal bromides such as LiBr, NaBr, KBr, CsBr, and $CaBr_2$.

These electrolyte salts can be used singly or in combination of two or more thereof.

The solvent is not particularly limited as long as it does not cause corrosion or decomposition of a substance constituting the battery to deteriorate performance, and dissolves an electrolyte salt.

Examples of the solvent include, as nonaqueous solvents, cyclic esters such as ethylene carbonate, propylene carbonate, butylene carbonate, and $\gamma$-butyrolactone; ethers such as tetrahydrofuran and dimethoxyethane; chain esters such as methyl acetate, dimethyl carbonate, diethyl carbonate, ethyl methyl carbonate; and nitriles such as acetonitrile.

These solvents can be used singly or in combination of two or more thereof.

In addition, as the solid electrolyte, inorganic solid electrolytes such as sulfide-based solid electrolytes and oxide-based solid electrolytes, and organic solid electrolytes such as polymer-based electrolytes can be suitably used. Using these solid electrolytes can provide an all-solid-state battery not using an electrolytic solution.

Examples of the sulfide-based solid electrolyte include thio-LISICON-based materials such as a $Li_2S$-$SiS_2$-lithium compound (herein, the lithium compound is at least one selected from the group consisting of $Li_3PO_4$, LiI, and $Li_4SiO_4$), $Li_2S$-$P_2O_5$, $Li_2S$-$B_2S_5$, and $Li_2S$-$P_2S_5$-$GeS_2$.

Examples of the oxide-based solid electrolyte include $Li_5La_3M_2O_{12}$ (M = Nb, Ta) and $Li_7La_3Zr_2O_{12}$ that are oxides having a garnet type structure, an oxyacid salt compound based on a $\gamma$-$Li_3PO_4$ structure collectively referred to as LISICON, a perovskite type, $Li_{3.3}PO_{3.8}N_{0.22}$ collectively referred to as LIPON, and sodium or alumina.

Examples of the polymer solid electrolyte include polyethylene oxide materials and polymer compounds obtained by polymerizing or copolymerizing monomers such as hexafluoropropylene, tetrafluoroethylene, trifluoroethylene, ethylene, propylene, acrylonitrile, vinylidene chloride, acrylic acid, methacrylic acid, methyl acrylate, ethyl acrylate, methyl methacrylate, styrene, and vinylidene fluoride.

The polymer solid electrolyte may include a supporting salt and a plasticizer. Examples of the supporting salt include lithium(fluorosulfonylimide). Examples of the plasticizer include succinonitrile.

A battery produced using the composition for forming an electrode according to the present invention has high battery characteristics although the amount of a binder (for example, a fluorine binder) is small as compared with a general secondary battery.

The form of the secondary battery and the type of the electrolyte are not particularly limited, and any form of a lithium ion secondary battery, a nickel metal hydride battery, a manganese battery, an air battery, or the like may be used, but the lithium ion secondary battery is suitable.

The method for laminating the secondary battery and the production method are also not particularly limited.

In the case of application to a coin type, the electrode of the present invention may be punched into a predetermined disk shape and used. For example, the lithium ion secondary battery can be produced by placing one electrode (negative electrode) on a lid of a coin cell to which a washer and a spacer are welded, superimposing a separator impregnated with an electrolytic solution and having the same shape thereon, further superimposing the electrode (positive electrode) of the present invention from above with an electrode layer facing down, placing a case and a gasket, and sealing with a coin cell crimping machine.

(Method for producing composition for forming an electrode)

The method for producing a composition for forming an electrode according to the present invention is a method for producing a composition for forming an electrode of the present invention.

The method for producing the composition for forming an electrode according to the present invention includes mixing a specific compound, a binder, a solvent, and a positive electrode active material. The order of mixing these substances is not particularly limited.

One embodiment of the method for producing the composition for forming an electrode according to the present invention includes mixing a specific compound, a binder, a solvent, a first positive electrode active material in the form of a polycrystalline body, and a second positive electrode active material in the form of a single crystal. The order of mixing these substances is not particularly limited.

The mass ratio of the first positive electrode active material and the second positive electrode active material (first positive electrode active material : second positive electrode active material) in the composition for forming an electrode is not particularly limited, and is preferably 2:8 to 8:2, more preferably 4:6 to 8:2, and particularly preferably 4:6 to 7:3.

(Additive and gelation inhibitor)

The additive of the present invention is an additive of a composition for forming an electrode, the composition including a positive electrode active material, a binder, and a solvent.

The gelation inhibitor of the present invention is a gelation inhibitor of a composition for forming an electrode, the composition including a positive electrode active material, a binder, and a solvent. The gelation inhibitor is added to a composition for forming an electrode, the composition including a positive electrode active material, a binder, and a solvent to inhibit gelation of the composition for forming an electrode.

The additive and the gelation inhibitor are the above-described specific compounds, and examples and preferred examples thereof include the examples and preferred examples described in the description of the above-described specific compounds.

Examples and preferred examples of the positive electrode active material include the examples and preferred examples described in the description of the positive electrode active material as the component contained in the composition for forming an electrode according to the present invention.

Examples and preferred examples of the binder include the examples and preferred examples described in the description of the binder as the component contained in the composition for forming an electrode according to the present invention.

Examples and preferred examples of the solvent include the examples and preferred examples described in the description of the solvent as the component contained in the composition for forming an electrode according to the present invention.

The composition for forming an electrode, the composition including the additive and the gelation inhibitor may include other components. Examples and preferred examples of the components include the examples and preferred examples described in the description of other components as the component contained in the composition for forming an electrode according to the present invention.

(Method for inhibiting gelation and use)

The method for inhibiting gelation of the present invention is a method for inhibiting gelation of a composition for forming an electrode, the composition including a positive electrode active material, a binder, and a solvent. In the method for inhibiting gelation, the composition for forming an electrode is set to contain a specific compound.

The use of the present invention is the use of a specific compound for inhibiting gelation of a composition for forming an electrode, the composition including a positive electrode active material, a binder, and a solvent.

Examples and preferred examples of the specific compound include the examples and preferred examples described in the above description of the specific compound.

Examples and preferred examples of the positive electrode active material include the examples and preferred examples described in the description of the positive electrode active material as the component contained in the composition for forming an electrode according to the present invention.

Examples and preferred examples of the binder include the examples and preferred examples described in the description of the binder as the component contained in the composition for forming an electrode according to the present invention.

Examples and preferred examples of the solvent include the examples and preferred examples described in the description of the solvent as the component contained in the composition for forming an electrode according to the present invention.

The composition for forming an electrode used in the method for inhibiting gelation may include other components. Examples and preferred examples of the components include the examples and preferred examples described in the description of other components as the component contained in the composition for forming an electrode according to the present invention.

Examples

Hereinafter, the present invention will be more specifically described with reference to examples and comparative examples, but the present invention is not limited to the following examples.

The proton dissociation energy and the bond dissociation energy of the additives used in Examples and Comparative Examples of the present invention were calculated by the following method by performing quantum chemical

calculation. As a quantum chemical calculation program, calculation was performed by density functional theory (DFT) using Gaussian16, which is software for calculating molecular orbital manufactured by Gaussian, Inc.

[Method for calculating proton dissociation energy]

The optimized structure in the ground state of the target molecule (HA) under vacuum was calculated using B3LYP as the functional and 6-31+G(d) as the basis set, and the total energy E (HA) thereof was calculated. Further, for the anion ($A^-$) obtained by dissociating one dissociable proton ($H^+$) from the target molecule (HA), the optimized structure in the ground state under vacuum was calculated using B3LYP as the functional and 6-31+G(d) as the basis set, and the total energy E ($A^-$) thereof was calculated to calculate the proton dissociation energy $\Delta E_{pd}$ (unit: kJ/mol) defined by the following formula (a).

$$(a)\quad \Delta E_{pd} = [E(A^-) + E(H^+)] - E(HA)$$

However, protons ($H^+$) do not have electrons, and thus the total energy cannot be evaluated by quantum chemistry calculation, and the value of the total energy E ($H^+$) of protons herein was therefore set to 0 kJ/mol. For the target molecule having a plurality of dissociable protons, the proton dissociation energy for the proton dissociation site that gives the minimum total energy E (A-) of the anion after the proton dissociation was calculated in consideration of only the first proton dissociation.

[Method for calculating bond dissociation energy]

For a neutral radical (A·) obtained by extracting one hydrogen radical (H·) from the target molecule, the optimized structure in the ground state under vacuum was calculated using B3LYP as a functional and 6-31+G(d) as a basis set, and the total energy E(A·) was calculated. Further, also for the hydrogen radical (H·), the total energy E(H·) was calculated using B3LYP as a functional and 6-31+G(d) as a basis set, and the value of E(HA) obtained by the calculation of the proton dissociation energy was used to calculate the bond dissociation energy $\Delta E_{bd}$ (unit: kJ/mol) defined by the following formula (b).

$$(b)\quad \Delta E_{bd} = [E(A\cdot) + E(H\cdot)] - E(HA)$$

Although the target molecule has a plurality of hydrogen atoms, the bond dissociation energy at the abstraction site that gives the minimum total energy E(A·) of the neutral radical obtained by hydrogen abstraction was calculated in consideration of only one hydrogen abstraction.

The apparatus used in the present embodiment was as follows.

(1) Revolution-rotation mixer (Awatori Rentaro ARE-310, atmospheric-pressure type, manufactured by Thinky Corporation)
(2) Drying booth (manufactured by Nippon Spindle Manufacturing Co., Ltd.)
(3) Rheometer (condition 1) (MCR302, manufactured by Anton Paar; jig: CP40-1; measurement gap: 0.08 mm), the shear viscosity was measured at a measurement temperature of 25 °C while sweeping the shear rate from 0.01 to 1000 $sec^{-1}$. As the viscosity of the slurry, a value at 100 $sec^{-1}$ was employed.
(4) Rheometer (condition 2) (MCR302e, manufactured by Anton Paar; jig: PP50; measurement gap: 0.08 mm), the shear viscosity was measured at a measurement temperature of 25 °C while sweeping the shear rate from 0.01 to 1000 $sec^{-1}$. As the viscosity of the slurry, a value at 100 $sec^{-1}$ was employed.
(5) Roll press machine (SA-602, manufactured by Takumi Giken Co., Ltd.)
(6) X-ray diffractometer (X'Pert Pro MPD manufactured by PANalytical B.V.)

[X-ray diffraction measurement]

The X-ray diffraction pattern of the positive electrode active material was collected using an X'Pert Pro MPD (manufactured by PANalytical B.V.) using a CuK$\alpha$ radiation source (45 kV, 40 mA) emitting at a wavelength of 1.5418 Å. As a configuration of the device, a soller slit of 0.02 radians, an automatically variable divergence slit with an irradiation area of 10 mm, and a 1/2° anti-scattering slit were used on the incident side, and an anti-scattering slit of 8 mm and a soller slit of 0.02 radians were set on the light receiving side. The radius of the goniometer is 240 mm. In XRD, the diffraction pattern was obtained in the range of 10 to 100° (2$\theta$) at a step size of 0.013°/scan with a time per step of 250 seconds.

The crystallite diameter of the positive electrode active material was calculated from the diffraction angle of the

peak corresponding to the (104) plane and the full width at half maximum (FWHM), obtained from an X-ray diffraction pattern, the full width at half maximum being corrected by subtracting the instrumental broadening, using the well-known Scherrer equation.
[Scherrer equation]

[Mathematical equation 2]

$$\tau = \frac{K\lambda}{\beta\cos\theta}$$

$\tau$: crystallite diameter (unit: nm)
(The crystallite diameter refers to an average size of regular (crystalline) domains that can be equal to or less than the crystal grain size.)
K: Scherrer constant (K = 0.9)
$\lambda$: X-ray wavelength (CuK$\alpha$ = 0.15418 nm)
$\beta$:FWHM
$\theta$: 1/2 of diffraction angle 2$\theta$ of diffraction peak attributed to (104) plane

The peak of the (104) plane assigned to the crystal structure having the space group R-3m is observed at 44.5 ± 1° of the X-ray diffraction pattern.
The instrumental broadening was taken as the full width at half maximum at 47.3° obtained using Si powder (SRM640f, manufactured by NIST).
The raw materials and the like used in the present Examples are as follows.

<Positive electrode active material>

As the first positive electrode active material in the form of a polycrystalline body, S-800 was used. As the second positive electrode active material in the form of a single crystal, T81RS was used.

S-800: lithium nickel manganese cobalt oxide ($LiNi_{0.8}Co_{0.1}Mn_{0.1}O_2$, polycrystalline type, manufactured by Ningbo Ronbay New Energy Technology Co., Ltd., Ni ratio: 50 mass%, crystallite size determined by X-ray diffraction: 97 nm)
T81RS: lithium nickel manganese cobalt oxide ($LiNi_{0.8}Co_{0.1}Mn_{0.1}O_2$, single crystal type, manufactured by Hunan Shanshan Energy Technology Co., Ltd., Ni ratio: 50 mass%, crystallite size determined by X-ray diffraction: 296 nm)

<Binder>

Solef-5130: polyvinylidene fluoride (PVdF), manufactured by Solvay

<Conductive aid>

AB: Denka Black (registered trademark) Li100 (high purity acetylene black), manufactured by Denka Company Limited.

<Solvent>

NMP: N-methyl-2-pyrrolidone, manufactured by Nippon Refine Co., Ltd.

<Additives A1 to A27 and a1 to a25>

Additives described in the following Table 1-1 and Table 1-2 were used.
The additives listed in Table 1-1 are the additives used in Examples.
The additives listed in Table 1-2 are the additives used in Comparative Examples.
In addition, the presence or absence of dissociable protons, proton dissociation energy, and the bond dissociation energy of these additives are shown in Table 1-1 and Table 1-2. Further, Fig. 1 shows a graph in which proton

dissociation energy is plotted on a horizontal axis and bond dissociation energy is plotted on a vertical axis for additives A1 to A27, a1 to a12, and a25.

[Table 1-1]

| | Compound name | Manufacturer | Presence or absence of dissociable proton | Proton dissociation energy (KJ/mol) | Bond dissociation energy (kJ/mol) |
|---|---|---|---|---|---|
| A1 | 3-Methyl-1-phenyl-5-pyrazolone | Company T | Presence | 1428.1 | 343.54 |
| A2 | Bis (3-methyl-1-phenyl-5-pyrazolone) | Company T | Presence | 1372.0 | 330.74 |
| A3 | 1, 2-Benzisothiazol-3 (2H) -one | Company T | Presence | 1442.3 | 376.19 |
| A4 | 5-Mercapto-1-methyltetrazole | Company T | Presence | 1345.9 | 340.98 |
| A5 | X-12-1214A | Company S | Presence | 1455.7 | 404.53 |
| A6 | Phthalic Hydrazide | Company T | Presence | 1402.5 | 342.58 |
| A7 | Maleic Hydrazide | Company T | Presence | 1395.1 | 340.63 |
| A8 | 2-Mercaptobenzimidazole | Company T | Presence | 1372.9 | 318.24 |
| A9 | Isatin | Company T | Presence | 1428.6 | 422.11 |
| A10 | 3-Methyl-1-p-tolyl-5-pyrazolone | Company T | Presence | 1403.1 | 313.44 |
| A11 | Pyrrole-2-carboxylic acid | Company T | Presence | 1432.5 | 437.78 |
| A12 | 2, 6-Di-tert-butyl-p-cresol | Company T | Presence | 1438.6 | 322.11 |
| A13 | N-Phenyl-1-naphthylamine | Company T | Presence | 1471.0 | 349.58 |
| A14 | Oxindole | Company T | Presence | 1474.5 | 359.34 |
| A15 | 7-Hydroxy-5-methyl-[1, 2, 4]triazolo [1, 5-a]pyrimidine | Company T | Presence | 1346.7 | 368.48 |
| A16 | 5-Phenylhydantoin | Company T | Presence | 1435.0 | 320.69 |
| A17 | 3-Amino-1-phenyl-2-pyrazolin-5-one | Company T | Presence | 1435.8 | 341.53 |
| A18 | 1-(4-Chloropheny I)-3-methy I-5-pyrazolone | Company T | Presence | 1380.6 | 315.12 |
| A19 | 1-Phenyl-3-pyrazolidone | Company T | Presence | 1445.6 | 302.65 |
| A20 | 5-AminosalicylicAcid | Company T | Presence | 1396.2 | 340.00 |
| A21 | Irganox3114 | Company B | Presence | 1407.8 | 330.32 |
| A22 | IrganoxMD1024 | Company B | Presence | 1388.2 | 326.73 |
| A23 | ADK STAB AQ-40 | Company AD | Presence | 1450.7 | 342.29 |
| A24 | ADK STAB A0-80 | Company AD | Presence | 1377.6 | 329.31 |
| A25 | N, N' -Di-2-naphthyl-1, 4-phenylenediamine | Company T | Presence | 1459.2 | 345.50 |
| A26 | 2-[2-Hydroxy-5-[2- (methacryloyloxy)ethyl]phenyl]-2H- benzotriazole | Company T | Presence | 1447.3 | 383.95 |
| A27 | 3-Methyl-1-(4-sulfophenyl)-2-pyrazolin-5-one | Company T | Presence | 1342.7 | 348.85 |

[Table 1-2]

| | Compound name | Manufacturer | Presence or absence of dissociable proton | Proton dissociation energy (KJ/mol) | Bond dissociation energy (KJ/mol) |
|---|---|---|---|---|---|
| a1 | Benzoic acid | Company F | Presence | 1435.6 | 452.74 |
| a2 | 1H-1, 2, 4-Triazole | Company T | Presence | 1460.8 | 477.98 |
| a3 | 1, 2, 3-Triazole | Company F | Presence | 1453.1 | 477.94 |
| a4 | Bis (2, 2, 6, 6-tetramethyl-4-piperidyl) Sebacate | Company F | Presence | 1548.6 | 401.68 |
| a5 | Phthalimide | Company T | Presence | 1445.9 | 493.62 |
| a6 | 5, 5-Dimethylhydantoin | Company T | Presence | 1457.4 | 452.62 |
| a7 | Water-soluble methylol melamine (Nikaresin S176) | Company C | Presence | 1504.8 | 403.18 |
| a8 | 3, 5-Dimethyl-1-hydroxy-methylpyrazole | Company T | Presence | 1535.7 | 382.94 |
| a9 | o-Sulfobenzimide | Company T | Presence | 1370.3 | 465.44 |
| a10 | Oxalic acid | Company F | Presence | 1352.9 | 479.90 |
| a11 | Phthalazone | Company T | Presence | 1486.1 | 464.14 |
| a12 | 2, 3-Dimethyl-1-phenyl-5-pyrazolone | Company T | Presence | 1635.5 | 397.28 |
| a13 | 1, 8-Naphthyridine | Company T | Absence | Not calculated | 461.25 |
| a14 | 1, 10-Phenanthroline | Company T | Absence | | 461.67 |
| a15 | 4-Vinylpyridine | Company T | Absence | | 468.69 |
| a16 | 1, 3-bis (4, 5-dihydrooxazol-2-yl) benzene | Company F | Absence | | 365.41 |
| a17 | 2, 3-Benzofuran | Company T | Absence | | 492.73 |
| a18 | Benzothiazole | Company T | Absence | | 482.81 |
| a19 | 2, 1, 3-Benzothiadiazol | Company T | Absence | | 491.92 |
| a20 | 1, 5-Pentamethylenetetrazole | Company T | Absence | | 274.12 |
| a21 | Benzofurazan | Company A | Absence | | 493.58 |
| a22 | Anthranil | Company T | Absence | | 491.18 |
| a23 | Pyridine | Company F | Absence | | 468.29 |
| a24 | Triphenyl phosphite | Company T | Absence | | 488.59 |
| a25 | Pyrazole | Company T | Presence | 1509.4 | 477.36 |

The manufacturer names shown in Table 1-1 and Table 1-2 are as follows.

Company F: FUJIFILM Wako Pure Chemical Corporation
Company T: Tokyo Chemical Industry Co., Ltd.
Company S: Shin-Etsu Chemical Co., Ltd.
Company C: Nippon Carbide Industries Co., Inc.
Company B: BASF
Company AD: ADEKA Corporation
Company A: Sigma-Aldrich Co. LLC
X-12-1214A (trade name) of A5 is a silane coupling agent having a benzotriazole structure manufactured by Shin-Etsu Chemical Co., Ltd.

Irganox3114 (trade name) of A21 is 1,3,5-tris(3,5-di-tert.-butyl-4-hydroxybenzyl)-1,3,5-triazine-2,4,6(1H,3H,5H)-trione manufactured by BASF.

IrganoxMD1024 (trade name) of A22 is 2',3-bis[[3-[3,5-di-tert.-butyl-4-hydroxyphenyl]propionyl]]propionohydrazide manufactured by BASF.

ADK STAB AO-40 (trade name) of A23 is 6,6'-di-tert-butyl-4,4'-butylidenedi-m-cresol manufactured by ADEKA Corporation.

ADK STAB AO-80 (trade name) of A24 is 3,9-bis{2-[3-(3-tert-butyl-4-hydroxy-5-methylphenyl)propionyloxy]-1,1-dimethylethyl}-2,4,8,10-tetraoxaspiro[5.5]undecane manufactured by ADEKA Corporation.

In addition, the water-soluble methylolmelamine of a7 (Nikaresin S176: trade name) is water-soluble methylolmelamine manufactured by Nippon Carbide Industries Co., Inc.

·Preparation of composition for forming positive electrode (electrode slurry)

[Examples 1 to 15 and Comparative Examples 2 to 25]

An NMP solution (additive solution) of 5 mass% was prepared for each of the additives A1 to A15 and the additives a1 to a24. Subsequently, the positive electrode active material, the binder powder, the conductive aid, the additive solution, NMP, and water were mixed in a dry booth so as to have the composition ratios shown in Tables 2-1, 2-3, and 2-4, and mixed using a rotation-revolution type mixer to obtain an electrode slurry. The total amount of each of the prepared slurries was 100 g, the solid content was 73 mass%, and the solvent composition of the slurry was adjusted so as to be NMP/$H_2O$ (mass ratio) = 95/5. The water was added in order to intentionally produce a state in which the amount of water in the slurry was large.

[Examples 16 to 19 and Comparative Example 26]

The positive electrode active material, the binder powder, the conductive aid, the additive, NMP, and water were mixed in a dry booth so as to have the composition ratios shown in Table 2-2 and Table 2-4, and mixed using a rotation-revolution type mixer to obtain an electrode slurry. The total amount of each of the prepared slurries was 100 g, the solid content was 73 mass%, and the solvent composition of the slurry was adjusted so as to be NMP/$H_2O$ (mass ratio) = 95/5. The water was added in order to intentionally produce a state in which the amount of water in the slurry was large.

[Example 20]

An NMP solution (additive solution) of 5 mass% for Additive A2 was prepared. The positive electrode active material, the binder powder, the conductive aid, the additive solution, NMP, and water were mixed in a dry booth so as to have the composition ratios shown in Table 2-2, and mixed using a rotation-revolution type mixer to obtain an electrode slurry. The total amount of the prepared slurry was 100 g, the solid content was 71 mass%, and the solvent composition of the slurry was adjusted so as to be NMP/$H_2O$ (mass ratio) = 95/5. The water was added in order to intentionally produce a state in which the amount of water in the slurry was large.

[Example 21]

An NMP solution (additive solution) of 5 mass% for Additive A2 was prepared. The positive electrode active material, the binder powder, the conductive aid, the additive solution, NMP, and water were mixed in a dry booth so as to have the composition ratios shown in Table 2-2, and mixed using a rotation-revolution type mixer to obtain an electrode slurry. The total amount of the prepared slurry was 100 g, the solid content was 73.5 mass%, and the solvent composition of the slurry was adjusted so as to be NMP/$H_2O$ (mass ratio) = 95/5. The water was added in order to intentionally produce a state in which the amount of water in the slurry was large.

[Examples 22 to 28]

An NMP solution (additive solution) of 5 mass% was prepared for each additive of Additives A20 to A26. Subsequently, the positive electrode active material, the binder powder, the conductive aid, the additive solution, NMP, and water were mixed in a dry booth so as to have the composition ratios shown in Table 2-2, and mixed using a rotation-revolution type mixer to obtain an electrode slurry. The total amount of each of the prepared slurries was 100 g, the solid content was 73.5 mass%, and the solvent composition of the slurry was adjusted so as to be NMP/$H_2O$ (mass ratio) = 98.5/1.5. The water was added in order to intentionally produce a state in which the amount of water in the slurry was large.

[Example 29]

The positive electrode active material, the binder powder, the conductive aid, the additive, NMP, and water were mixed in a dry booth so as to have the composition ratios shown in Table 2-2, and mixed using a rotation-revolution type mixer to obtain an electrode slurry. The total amount of the prepared slurry was 100 g, the solid content was 73.5 mass%, and the solvent composition of the slurry was adjusted so as to be NMP/$H_2O$ (mass ratio) = 98.5/1.5. The water was added in order to intentionally produce a state in which the amount of water in the slurry was large.

[Comparative Example 1]

The positive electrode active material, the binder powder, the conductive aid, NMP, and water were mixed in a dry booth so as to have the composition ratios shown in Table 2-3, and mixed using a rotation-revolution type mixer to obtain an electrode slurry. The total amount of the prepared slurry was 100 g, the solid content was 73 mass%, and the solvent composition of the slurry was adjusted so as to be NMP/$H_2O$ (mass ratio) = 95/5. The water was added in order to intentionally produce a state in which the amount of water in the slurry was large.

[Comparative Example 27]

The positive electrode active material, the binder powder, the conductive aid, NMP, and water were mixed in a dry booth so as to have the composition ratios shown in Table 2-4, and mixed using a rotation-revolution type mixer to obtain an electrode slurry. The total amount of the prepared slurry was 100 g, the solid content was 71 mass%, and the solvent composition of the slurry was adjusted so as to be NMP/$H_2O$ (mass ratio) = 95/5. The water was added in order to intentionally produce a state in which the amount of water in the slurry was large.

[Comparative Example 28]

The positive electrode active material, the binder powder, the conductive aid, NMP, and water were mixed in a dry booth so as to have the composition ratios shown in Table 2-4, and mixed using a rotation-revolution type mixer to obtain an electrode slurry. The total amount of the prepared slurry was 100 g, the solid content was 73.5 mass%, and the solvent composition of the slurry was adjusted so as to be NMP/$H_2O$ (mass ratio) = 95/5. The water was added in order to intentionally produce a state in which the amount of water in the slurry was large.

[Comparative Example 29]

The positive electrode active material, the binder powder, the conductive aid, NMP, and water were mixed in a dry booth so as to have the composition ratios shown in Table 2-4, and mixed using a rotation-revolution type mixer to obtain an electrode slurry. The total amount of the prepared slurries was 100 g, the solid content was 73.5 mass%, and the solvent composition of the slurry was adjusted so as to be NMP/$H_2O$ (mass ratio) = 98.5/1.5. The water was added in order to intentionally produce a state in which the amount of water in the slurry was large.

The viscosity of the slurry obtained above was measured immediately after preparation using a rheometer (condition 1) or a rheometer (condition 2). In addition, after storage for 24 hours at 40°C, the presence or absence of gelation was visually confirmed. For those not gelled, viscosity measurement was similarly performed using a rheometer (condition 1) or a rheometer (condition 2) to confirm the presence or absence of thickening and gelation tendency, and determination was performed based on the following criteria. These evaluations are also summarized in each table. The viscosities of Examples 1 to 21 and Comparative Examples 1 to 28 were measured with a rheometer (condition 1), and the viscosities of Examples 22 to 29 and Comparative Example 29 were measured with a rheometer (condition 2).

[Criteria for determination]

A: The composition is not gelled and can be used for electrode formation
B: The composition becomes gelled and fails to be used for electrode formation

Viscosity change rate (%) = ((viscosity after storage - initial viscosity)/initial viscosity) $\times$ 100

Each of the electrode slurries obtained in Examples 1 to 29 and Comparative Examples 1 to 29 was uniformly

applied to an aluminum foil (15 μm thick, UACJ Corporation) as a current collector using a doctor blade, dried at 80°C for 30 minutes to form an active material layer, and further pressed with a roll press machine twice at a linear pressure of 0.25 kN/cm, twice at 1 kN/cm, and twice at 3 kN/cm to fabricate an electrode. Four disk-shaped electrodes having a diameter of 10 mm were punched out from the obtained positive electrode; the mass (mass obtained by subtracting the mass of a punched non-coated portion having a diameter of 10 mm from the mass of the punched electrode) of the positive electrode layer and the thickness (thickness obtained by subtracting thickness of substrate from thickness of punched electrode) of the electrode layer were measured; and the electrode density was determined from the average value thereof. These evaluations are also summarized in each table.

[Table 2-1]

| | Solid content (g) | | | | | Viscosity (mPa·s) | | Viscosity change rate (%) | Electrode density (g/mL) | Evaluation |
|---|---|---|---|---|---|---|---|---|---|---|
| | Positive electrode active material | | Binder | Conductive aid | Additive | On the day | Next day | | | |
| Example 1 | S-800 (35.55 g) | T81RS (35.55 g) | Solef5130 (0.73 g) | AB (1.095 g) | A1 (0.073 g) | 5.04 | 5.86 | 16 | 3.21 | A |
| Example 2 | S-800 (35.55 g) | T81RS (35.55 g) | Solef5130 (0.73 g) | AB (1.095 g) | A2 (0.073 g) | 4.83 | 5.75 | 19 | 3.26 | A |
| Example 3 | S-800 (35.55 g) | T81RS (35.55 g) | Solef5130 (0.73 g) | AB (1.095 g) | A3 (0.073 g) | 4.77 | 4.56 | -4 | 3.25 | A |
| Example 4 | S-800 (35.55 g) | T81RS (35.55 g) | Solef5130 (0.73 g) | AB (1.095 g) | A4 (0.073 g) | 4.95 | 6.36 | 28 | 3.24 | A |
| Example 5 | S-800 (35.55 g) | T81RS (35.55 g) | Solef5130 (0.73 g) | AB (1.095 g) | A5 (0.073 g) | 5.29 | 5.78 | 9 | 3.23 | A |
| Example 6 | S-800 (35.55 g) | T81RS (35.55 g) | Solef5130 (0.73 g) | AB (1.095 g) | A6 (0.073 g) | 5.17 | 5.57 | 8 | 3.21 | A |
| Example 7 | S-800 (35.55 g) | T81RS (35.55 g) | Solef5130 (0.73 g) | AB (1.095 g) | A7 (0.073 g) | 6.16 | 6.48 | 5 | 3.22 | A |
| Example 8 | S-800 (35.55 g) | T81RS (35.55 g) | Solef5130 (0.73 g) | AB (1.095 g) | A8 (0.073 g) | 5.14 | 4.32 | -16 | 3.25 | A |
| Example 9 | S-800 (35.55 g) | T81RS (35.55 g) | Solef5130 (0.73 g) | AB (1.095 g) | A9 (0.073 g) | 5.12 | 5.86 | 14 | 3.19 | A |
| Example 10 | S-800 (35.55 g) | T81RS (35.55 g) | Solef5130 (0.73 g) | AB (1.095 g) | A10 (0.073 g) | 5.04 | 5.53 | 10 | 3.22 | A |
| Example 11 | S-800 (35.55 g) | T81RS (35.55 g) | Solef5130 (0.73 g) | AB (1.095 g) | A11 (0.073 g) | 4.85 | 4.28 | -12 | 3.18 | A |
| Example 12 | S-800 (35.55 g) | T81RS (35.55 g) | Solef5130 (0.73 g) | AB (1.095 g) | A12 (0.073 g) | 5.02 | 5.32 | 6 | 3.25 | A |
| Example 13 | S-800 (35.55 g) | T81RS (35.55 g) | Solef5130 (0.73 g) | AB (1.095 g) | A13 (0.073 g) | 4.32 | 3.17 | -27 | 3.23 | A |
| Example 14 | S-800 (35.55 g) | T81RS (35.55 g) | Solef5130 (0.73 g) | AB (1.095 g) | A14 (0.073 g) | 4.64 | 7.79 | 68 | 3.22 | A |
| Example 15 | S-800 (35.55 g) | T81RS (35.55 g) | Solef5130 (0.73 g) | AB (1.095 g) | A15 (0.073 g) | 4.72 | 15.10 | 220 | 3.16 | A |

[Table 2-2]

| | Solid content (g) | | | | | Viscosity (mPa·s) | | Viscosity change rate (%) | Electrode density (g/mL) | Evaluation |
|---|---|---|---|---|---|---|---|---|---|---|
| | Positive electrode active material | | Binder | Conductive aid | Additive | On the day | Next day | | | |
| Example 16 | S-800 (35.55 g) | T81RS (35.55 g) | Solef5130 (0.73 g) | AB (1.095 g) | A16 (0.073 g) | 5.41 | 6.42 | 19 | 3.22 | A |
| Example 17 | S-800 (35.55 g) | T81RS (35.55 g) | Solef5130 (0.73 g) | AB (1.095 g) | A17 (0.073 g) | 4.83 | 5.17 | 7 | 3.25 | A |
| Example 18 | S-800 (35.55 g) | T81RS (35.55 g) | Solef5130 (0.73 g) | AB (1.095 g) | A18 (0.073 g) | 4.88 | 5.10 | 5 | 3.23 | A |
| Example 19 | S-800 (35.55 g) | T81RS (35.55 g) | Solef5130 (0.73 g) | AB (1.095 g) | A19 (0.073 g) | 4.95 | 5.35 | 8 | 3.22 | A |
| Example 20 | - | T81RS (69.15 g) | Solef5130 (0.71 g) | AB (1.065 g) | A2 (0.071 g) | 5.41 | 6.02 | 11 | 3.10 | A |
| Example 21 | S-800 (71.59 g) | - | Solef5130 (0.735 g) | AB (1.1025 g) | A2 (0.0735 g) | 4.36 | 6.39 | 47 | 3.12 | A |
| Example 22 | S-800 (57.27 g) | T81RS (14.32 g) | Solef5130 (0.74 g) | AB (1.103 g) | A20 (0.073 g) | 3.67 | 3.95 | 8 | 3.53 | A |
| Example 23 | S-800 (57.27 g) | T81RS (14.32 g) | Solef5130 (0.74 g) | AB (1.103 g) | A21 (0.073 g) | 3.78 | 3.59 | -5 | 3.33 | A |
| Example 24 | S-800 (57.27 g) | T81RS (14.32 g) | Solef5130 (0.74 g) | AB (1.103 g) | A22 (0.073 g) | 3.27 | 3.71 | 14 | 3.31 | A |
| Example 25 | S-800 (57.27 g) | T81RS (14.32 g) | Solef5130 (0.74 g) | AB (1.103 g) | A23 (0.073 g) | 3.49 | 3.48 | 0 | 3.31 | A |
| Example 26 | S-800 (57.27 g) | T81RS (14.32 g) | Solef5130 (0.74 g) | AB (1.103 g) | A24 (0.073 g) | 3.63 | 3.73 | 3 | 3.29 | A |
| Example 27 | S-800 (57.27 g) | T81RS (14.32 g) | Solef5130 (0.74 g) | AB (1.103 g) | A25 (0.073 g) | 3.95 | 2.80 | -29 | 3.30 | A |
| Example 28 | S-800 (57.27 g) | T81RS (14.32 g) | Solef5130 (0.74 g) | AB (1.103 g) | A26 (0.073 g) | 3.43 | 3.60 | 5 | 3.28 | A |
| Example 29 | S-800 (57.27 g) | T81RS (14.32 g) | Solef5130 (0.74 g) | AB (1.103 g) | A27 (0.073 g) | 3.29 | 4.90 | 49 | 3.35 | A |

[Table 2-3]

| | Solid content (g) | | | | | Viscosity (mPa·s) | | Viscosity change rate (%) | Electrode density (g/mL) | Evaluation |
|---|---|---|---|---|---|---|---|---|---|---|
| | Positive electrode active material | | Binder | Conductive aid | Additive | On the day | Next day | | | |
| Comparative Example 1 | S-800 (35.59 g) | T81RS (35.59 g) | Solef5130 (0.73 g) | AB (1.095 g) | - | 3.66 | Gelled | - | 3.22 | B |
| Comparative Example 2 | S-800 (35.55 g) | T81RS (35.55 g) | Solef5130 (0.73 g) | AB (1.095 g) | a1 (0.073 g) | 4.52 | Gelled | - | 3.22 | B |
| Comparative Example 3 | S-800 (35.55 g) | T81RS (35.55 g) | Solef5130 (0.73 g) | AB (1.095 g) | a2 (0.073 g) | 4.38 | Gelled | - | 3.24 | B |
| Comparative Example 4 | S-800 (35.55 g) | T81RS (35.55 g) | Solef5130 (0.73 g) | AB (1.095 g) | a3 (0.073 g) | 4.69 | Gelled | - | 3.23 | B |
| Comparative Example 5 | S-800 (35.55 g) | T81RS (35.55 g) | Solef5130 (0.73 g) | AB (1.095 g) | a4 (0.073 g) | 3.93 | Gelled | - | 3.26 | B |
| Comparative Example 6 | S-800 (35.55 g) | T81RS (35.55 g) | Solef5130 (0.73 g) | AB (1.095 g) | a5 (0.073 g) | 4.54 | Gelled | - | 3.22 | B |
| Comparative Example 7 | S-800 (35.55 g) | T81RS (35.55 g) | Solef5130 (0.73 g) | AB (1.095 g) | a6 (0.073 g) | 4.37 | Gelled | - | 3.34 | B |
| Comparative Example 8 | S-800 (35.55 g) | T81RS (35.55 g) | Solef5130 (0.73 g) | AB (1.095 g) | a7 (0.073 g) | 3.42 | Gelled | - | 3.23 | B |
| Comparative Example 9 | S-800 (35.55 g) | T81RS (35.55 g) | Solef5130 (0.73 g) | AB (1.095 g) | a8 (0.073 g) | 4.25 | Gelled | - | 3.19 | B |
| Comparative Example 10 | S-800 (35.55 g) | T81RS (35.55 g) | Solef5130 (0.73 g) | AB (1.095 g) | a9 (0.073 g) | 4.41 | Gelled | - | 3.22 | B |
| Comparative Example 11 | S-800 (35.55 g) | T81RS (35.55 g) | Solef5130 (0.73 g) | AB (1.095 g) | a10 (0.073 g) | 4.71 | Gelled | - | 3.25 | B |
| Comparative Example 12 | S-800 (35.55 g) | T81RS (35.55 g) | Solef5130 (0.73 g) | AB (1.095 g) | a11 (0.073 g) | 4.14 | Gelled | - | 3.23 | B |
| Comparative Example 13 | S-800 (35.55 g) | T81RS (35.55 g) | Solef5130 (0.73 g) | AB (1.095 g) | a12 (0.073 g) | 3.76 | Gelled | - | 3.22 | B |
| Comparative Example 14 | S-800 (35.55 g) | T81RS (35.55 g) | Solef5130 (0.73 g) | AB (1.095 g) | a13 (0.073 g) | 3.56 | Gelled | - | 3.19 | B |

[Table 2-4]

| | Solid content (g) | | | | | Viscosity (mPa·s) | | Viscosity change rate (%) | Electrode density (g/mL) | Evaluation |
|---|---|---|---|---|---|---|---|---|---|---|
| | Positive electrode active material | | Binder | Conductive aid | Additive | On the day | Next day | | | |
| Comparative Example 15 | S-800 (35.55 g) | T81RS (35.55 g) | Solef5130 (0.73 g) | AB (1.095 g) | a14 (0.073 g) | 3.82 | Gelled | - | 3.20 | B |
| Comparative Example 16 | S-800 (35.55 g) | T81RS (35.55 g) | Solef5130 (0.73 g) | AB (1.095 g) | a15 (0.073 g) | 3.34 | Gelled | - | 3.22 | B |
| Comparative Example 17 | S-800 (35.55 g) | T81RS (35.55 g) | Solef5130 (0.73 g) | AB (1.095 g) | a16 (0.073 g) | 3.92 | Gelled | - | 3.25 | B |
| Comparative Example 18 | S-800 (35.55 g) | T81RS (35.55 g) | Solef5130 (0.73 g) | AB (1.095 g) | a17 (0.073 g) | 4.02 | Gelled | - | 3.21 | B |
| Comparative Example 19 | S-800 (35.55 g) | T81RS (35.55 g) | Solef5130 (0.73 g) | AB (1.095 g) | a18 (0.073 g) | 4.05 | Gelled | - | 3.23 | B |
| Comparative Example 20 | S-800 (35.55 g) | T81RS (35.55 g) | Solef5130 (0.73 g) | AB (1.095 g) | a19 (0.073 g) | 3.78 | Gelled | - | 3.17 | B |
| Comparative Example 21 | S-800 (35.55 g) | T81RS (35.55 g) | Solef5130 (0.73 g) | AB (1.095 g) | a20 (0.073 g) | 3.81 | Gelled | - | 3.30 | B |
| Comparative Example 22 | S-800 (35.55 g) | T81RS (35.55 g) | Solef5130 (0.73 g) | AB (1.095 g) | a21 (0.073 g) | 3.90 | Gelled | - | 3.25 | B |
| Comparative Example 23 | S-800 (35.55 g) | T81RS (35.55 g) | Solef5130 (0.73 g) | AB (1.095 g) | a22 (0.073 g) | 3.59 | Gelled | - | 3.27 | B |
| Comparative Example 24 | S-800 (35.55 g) | T81RS (35.55 g) | Solef5130 (0.73 g) | AB (1.095 g) | a23 (0.073 g) | 4.95 | Gelled | - | 3.22 | B |
| Comparative Example 25 | S-800 (35.55 g) | T81RS (35.55 g) | Solef5130 (0.73 g) | AB (1.095 g) | a24 (0.073 g) | 4.62 | Gelled | - | 3.21 | B |
| Comparative Example 26 | S-800 (35.55 g) | T81RS (35.55 g) | Solef5130 (0.73 g) | AB (1.095 g) | a25 (0.073 g) | 3.80 | Gelled | - | 3.25 | B |
| Comparative Example 27 | - | T81RS (69.23 g) | Solef5130 (0.71 g) | AB (1.065 g) | - | 4.15 | Gelled | - | 3.11 | B |
| Comparative Example 28 | S-800 (71.66 g) | - | Solef5130 (0.735 g) | AB (1.025 g) | - | 4.52 | Gelled | - | 3.11 | B |

(continued)

| | Solid content (g) | | | | | Viscosity (mPa·s) | | Viscosity change rate (%) | Electrode density (g/mL) | Evaluation |
|---|---|---|---|---|---|---|---|---|---|---|
| | Positive electrode active material | | Binder | Conductive aid | Additive | On the day | Next day | | | |
| Comparative Example 29 | S-800 (57.33 g) | T81RS (14.33 g) | Solef5130 (0.74 g) | AB (1.103 g) | - | 2.85 | Gelled | - | 3.33 | B |

A symbol "-" in the results of "Viscosity change rate (%)" in Tables 2-3 and 2-4 indicates that gelation occurred after storage for 24 hours at 40°C, and the viscosity after storage for 24 hours at 40°C failed to be measured.

From the results in Table 2-1 to Table 2-4, it has been confirmed that in the composition for forming an electrode according to the present invention, the composition including a specific additive having a proton dissociation energy of less than 1504.7 (kJ/mol) and a bond dissociation energy of less than 452.61 (kJ/mol), thickening and gelation were inhibited, and storage stability was improved.

Therefore, the composition for forming an electrode can be suitably used for industrial production of a lithium ion secondary battery without impairing coatability although time elapses after preparation of the composition for forming an electrode.

## Claims

1. A composition for forming an electrode, comprising: a compound having a ring structure and an unsaturated bond; a positive electrode active material; a binder; and a solvent, wherein

   the compound has a dissociable proton in a molecule,
   a proton dissociation energy of the compound is less than 1504.7 (kJ/mol), and
   a bond dissociation energy of the compound is less than 452.61 (kJ/mol).

2. The composition for forming an electrode according to claim 1, wherein the positive electrode active material includes a first positive electrode active material in the form of a polycrystalline body and a second positive electrode active material in the form of a single crystal.

3. The composition for forming an electrode according to claim 2, wherein the first positive electrode active material is a lithium-containing transition metal oxide particle having a layered rock salt structure, and a crystallite diameter determined by the Scherrer equation based on a diffraction peak of a (104) plane obtained from an X-ray diffraction pattern of the lithium-containing transition metal oxide particle using a CuK$\alpha$ radiation source is 20 nm or more and less than 500 nm.

4. The composition for forming an electrode according to claim 2, wherein the second positive electrode active material is a lithium-containing transition metal oxide particle having a layered rock salt structure, and a crystallite diameter determined by the Scherrer equation based on a diffraction peak of a (104) plane obtained from an X-ray diffraction pattern of the lithium-containing transition metal oxide particle using a CuK$\alpha$ radiation source is 50 nm or more and less than 800 nm.

5. The composition for forming an electrode according to claim 3, wherein the lithium-containing transition metal oxide particle having a layered rock salt structure in the first positive electrode active material is a crystalline metal-based oxide particle represented by the general formula:

   $$Li_aNi_{(1-x-y)}Co_xM^1_yM^2_zO_2$$

   wherein $M^1$ represents at least one selected from the group consisting of Mn and Al, $M^2$ represents at least one selected from the group consisting of Zr, Ti, Mg, B, W, and V, and $1.00 \leq a \leq 1.50$, $0.00 \leq x \leq 0.50$, $0.00 \leq y \leq 0.50$, and $0.000 \leq z \leq 0.020$.

6. The composition for forming an electrode according to claim 4, wherein the lithium-containing transition metal oxide particle having a layered rock salt structure in the second positive electrode active material is a crystalline metal-based oxide particle represented by the general formula:

   $$Li_aNi_{(1-x-y)}Co_xM^1_yM^2_zO_2$$

   wherein $M^1$ represents at least one selected from the group consisting of Mn and Al, $M^2$ represents at least one selected from the group consisting of Zr, Ti, Mg, B, W, and V, and $1.00 \leq a \leq 1.50$, $0.00 \leq x \leq 0.50$, $0.00 \leq y \leq 0.50$, and $0.000 \leq z \leq 0.020$.

7. The composition for forming an electrode according to claim 1, wherein the ring structure is an aromatic ring.

8. The composition for forming an electrode according to claim 1, wherein the compound has a hetero atom.

9. The composition for forming an electrode according to claim 1, wherein the positive electrode active material includes a Ni-containing metal oxide.

10. The composition for forming an electrode according to claim 1, wherein the positive electrode active material contains Ni, and a Ni content in the positive electrode active material is 30 mass% or more and 61 mass% or less.

11. The composition for forming an electrode according to claim 1, wherein the solvent is an aprotic solvent.

12. The composition for forming an electrode according to claim 1, wherein the binder is a fluorine-based binder.

13. The composition for forming an electrode according to claim 1, further comprising a conductive aid.

14. An electrode layer obtained from the composition for forming an electrode according to any one of claims 1 to 13.

15. A secondary battery comprising the electrode layer according to claim 14.

16. A method for producing the composition for forming an electrode according to claims 1 to 13, the method comprising mixing the compound, the binder, the solvent, a first positive electrode active material in the form of a polycrystalline body, and a second positive electrode active material in the form of a single crystal.

17. The method for producing a composition for forming an electrode according to claim 16, wherein a mass ratio between the first positive electrode active material and the second positive electrode active material (first positive electrode active material : second positive electrode active material) in the composition for forming an electrode is 2:8 to 8:2.

18. An additive of a composition for forming an electrode, the composition comprising: a first positive electrode active material in the form of a polycrystalline body; a second positive electrode active material in the form of a single crystal; a binder; and a solvent,
the additive having a dissociable proton in a molecule, a proton dissociation energy of less than 1504.7 (kJ/mol), and a bond dissociation energy of less than 452.61 (kJ/mol).

19. A gelation inhibitor of a composition for forming an electrode, the composition comprising: a first positive electrode active material in the form of a polycrystalline body; a second positive electrode active material in the form of a single crystal; a binder; and a solvent,
the gelation inhibitor having a dissociable proton in a molecule, a proton dissociation energy of less than 1504.7 (kJ/mol), and a bond dissociation energy of less than 452.61 (kJ/mol).

20. A method for inhibiting gelation of a composition for forming an electrode, the composition comprising: a first positive electrode active material in the form of a polycrystalline body; a second positive electrode active material in the form of a single crystal; a binder; and a solvent,
the method causing the composition for forming an electrode to contain a compound having a dissociable proton in a molecule, a proton dissociation energy of less than 1504.7 (kJ/mol), and a bond dissociation energy of less than 452.61 (kJ/mol).

FIG. 1

● EXAMPLE (A1～A27)
○ COMPARATIVE EXAMPLE (a1～a12, a25)
BOND DISSOCIATION ENERGY (kJ/mol)
500
450
400
350
300
250
1,300
1,350
1,400
1,450
1,500
1,550
1,600
1,650
PROTON DISSOCIATION ENERGY (kJ/mol)

# INTERNATIONAL SEARCH REPORT

International application No.
**PCT/JP2024/039211**

**A. CLASSIFICATION OF SUBJECT MATTER**

***H01M 4/139***(2010.01)i; ***H01M 4/13***(2010.01)i; ***H01M 4/36***(2006.01)i; ***H01M 4/62***(2006.01)i; ***H01M 4/131***(2010.01)i; ***H01M 4/505***(2010.01)i; ***H01M 4/525***(2010.01)i; ***H01M 4/1391***(2010.01)i
FI: H01M4/139; H01M4/13; H01M4/131; H01M4/1391; H01M4/36 D; H01M4/36 E; H01M4/505; H01M4/525; H01M4/62 Z

According to International Patent Classification (IPC) or to both national classification and IPC

**B. FIELDS SEARCHED**

Minimum documentation searched (classification system followed by classification symbols)

H01M4/139; H01M4/13; H01M4/36; H01M4/62; H01M4/131; H01M4/505; H01M4/525; H01M4/1391

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 111463508 A (ZHUHAI COSMX BATTERY CO., LTD.) 28 July 2020 (2020-07-28) example 1 | 1, 7, 11-15 |
| X<br>Y | WO 2012/029839 A1 (ZEON CORPORATION) 08 March 2012 (2012-03-08) example 1 | 1, 7-8, 13-15<br>2-6, 9-10, 16-20 |
| Y | US 2021/0384505 A1 (SK INNOVATION CO., LTD.) 09 December 2021 (2021-12-09) example 1, tables 2-3 | 2-6, 9-10, 16, 18-20 |
| Y | US 2021/0135215 A1 (SAMSUNG SDI CO., LTD.) 06 May 2021 (2021-05-06) paragraphs [0025], [0088], examples 1-1, fig. 2 | 2-6, 9-10, 16, 18-20 |
| Y | JP 2022-542774 A (BASF SHANSHAN BATTERY MATERIALS (NINGXIANG) CO., LTD.) 07 October 2022 (2022-10-07) claim 1, examples | 2, 5, 16-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 January 2025** | **28 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/039211**

C. DOCUMENTS CONSIDERED TO BE RELEVANT

| Category* | Citation of document, with indication, where appropriate, of the relevant passages | Relevant to claim No. |
|---|---|---|
| A | US 2021/0384502 A1 (SK INNOVATION CO., LTD.) 09 December 2021 (2021-12-09) entire text, all drawings | 1-20 |

Form PCT/ISA/210 (second sheet) (July 2022)

**INTERNATIONAL SEARCH REPORT**
**Information on patent family members**

International application No.
**PCT/JP2024/039211**

| Patent document cited in search report | Publication date (day/month/year) | Patent family member(s) | Publication date (day/month/year) |
|---|---|---|---|
| CN 111463508 A | 28 July 2020 | (Family: none) | |
| WO 2012/029839 A1 | 08 March 2012 | CN 103190022 A | |
| | | KR 10-2013-0113442 A | |
| US 2021/0384505 A1 | 09 December 2021 | EP 3919445 A1 | |
| | | KR 10-2293034 B | |
| | | CN 113363439 A | |
| US 2021/0135215 A1 | 06 May 2021 | EP 3817105 A1 | |
| | | KR 10-2021-0052320 A | |
| | | CN 112751025 A | |
| JP 2022-542774 A | 07 October 2022 | US 2022/0416236 A1 claim 1, examples | |
| | | WO 2021/000868 A1 | |
| | | EP 3996171 A1 | |
| US 2021/0384502 A1 | 09 December 2021 | EP 3919444 A2 | |
| | | KR 10-2021-0150863 A | |
| | | CN 113764656 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000090917 A
- JP 2019121471 A
- JP H09306502 A
- JP H1079244 A
- JP 2006286240 A
- WO 2017034001 A